**Europäisches Patentamt**

**European Patent Office**

**Office européen des brevets**

(19)

(11) **EP 1 340 582 A1**

(12) **EUROPÄISCHE PATENTANMELDUNG**

(43) Veröffentlichungstag:
    **03.09.2003 Patentblatt 2003/36**

(51) Int Cl.⁷: **B23K 20/00**, B23K 20/10,
    H01L 21/607, G01H 9/00

(21) Anmeldenummer: **02004700.7**

(22) Anmeldetag: **28.02.2002**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(71) Anmelder: **Esec Trading S.A.**
    **6330 Cham (CH)**

(72) Erfinder:
    • **Onda, Nicolino, Dr.**
     **7310 Bad Ragaz (CH)**

    • **Greber, Alexander**
     **6205 Eich (CH)**
    • **Hess, Peter**
     **6318 Walchwil (CH)**
    • **Michler, Markus, Dr.**
     **6800 Feldkirch (AT)**

(74) Vertreter: **Falk, Urs, Dr.**
    **Patentanwaltsbüro Dr. Urs Falk,**
    **Eichholzweg 9A**
    **6312 Steinhausen (CH)**

(54) **Verfahren und Einrichtung für die Messung der Amplitude einer frei schwingenden Kapillare eines Wire Bonders**

(57)     Bei der Messung einer Komponente $A_y$ der Amplitude der Schwingungen der Spitze einer Kapillare (1), die an einem von einem Ultraschallgeber (2) beaufschlagbaren Horn (3) eingespannt ist, wobei die Messung auf der Abschattung eines Lichtstrahls (6) durch die Kapillare basiert und wobei die Intensität des Lichtstrahls mittels eines Lichtempfängers (14) gemessen wird, wird die Kapillare auf der einen Seite des Lichtstrahls, ohne dass sie den Lichtstrahl abschattet, plaziert und mit Ultraschall beaufschlagt. Dann wird die Kapillare schrittweise durch den Lichtstrahl hindurch bewegt, wobei bei jedem der i = 1 bis n Schritte der Gleichspannungsanteil $U_{DC}(y_i)$ und der Wechselspannungsanteil $U_{AC}(y_i)$ des Ausgangssignals des Lichtempfängers sowie eine Koordinate $y_i$ ermittelt werden, wobei die Koordinate $y_i$ die Position der Kapillare in Bezug auf eine senkrecht zum Lichtstrahl verlaufende Koordinatenachse y bezeichnet. Aus den gemessenen Werten wird dann die Amplitude $A_y$ berechnet.

Fig. 1

EP 1 340 582 A1

**Beschreibung**

Die Erfindung betrifft ein Verfahren und eine Einrichtung für die Messung der Amplitude einer frei schwingenden Kapillare eines Wire Bonders der im Oberbegriff des Anspruchs 1 genannten Art.

Ein Wire Bonder ist eine Maschine, mit der Halbleiterchips nach deren Montage auf einem Substrat verdrahtet werden. Der Wire Bonder weist eine Kapillare auf, die an der Spitze eines Horns eingespannt ist. Die Kapillare dient zum Befestigen des Drahtes auf einem Anschlusspunkt des Halbleiterchips und auf einem Anschlusspunkt des Substrates sowie zur Drahtführung zwischen den beiden Anschlusspunkten. Bei der Herstellung der Drahtverbindung zwischen dem Anschlusspunkt des Halbleiterchips und dem Anschlusspunkt des Substrates wird das aus der Kapillare ragende Drahtende zunächst zu einer Kugel geschmolzen. Anschliessend wird die Drahtkugel auf dem Anschlusspunkt des Halbleiterchips mittels Druck und Ultraschall befestigt. Dabei wird das Horn von einem Ultraschallgeber mit Ultraschall beaufschlagt. Diesen Prozess nennt man Ball-bonden. Dann wird der Draht auf die benötigte Drahtlänge durchgezogen, zu einer Drahtbrücke geformt und auf dem Anschlusspunkt des Substrates verschweisst. Diesen letzten Prozessteil nennt man Wedge-bonden. Nach dem Befestigen des Drahtes auf dem Anschlusspunkt des Substrats wird der Draht abgerissen und der nächste Bondzyklus kann beginnen.

Aus dem europäischen Patent EP 498 936 B1 sind ein Verfahren und eine Einrichtung bekannt, um die Amplitude der frei schwingenden Kapillare zu messen. Der Messwert wird benützt für die Kalibrierung des Ultraschallgebers. Die Messung der Schwingungsamplitude der Kapillare erfolgt mittels einer Lichtschranke.

Aus der japanischen Patentanmeldung 10-209 199 sind ein Verfahren und eine Einrichtung bekannt, um die Amplitude der frei schwingenden Kapillare zu messen, bei denen für die Lichtschranke ein Laserstrahl benutzt wird.

Versuche haben gezeigt, dass die Messung mit der bekannten Technik keine reproduzierbaren Resultate liefert, wenn die Amplitude der Spitze der frei schwingenden Kapillare gemessen werden soll.

Der Erfindung liegt die Aufgabe zugrunde, ein Verfahren und eine Einrichtung für die Messung der Amplitude der Spitze einer frei schwingenden Kapillare zu entwickeln.

Die Erfindung besteht in den im Anspruch 1 angegebenen Merkmalen. Vorteilhafte Ausgestaltungen ergeben sich aus den abhängigen Ansprüchen.

Das erfindungsgemässe Verfahren basiert auf der Abschattung eines Lichtstrahles durch die Kapillare, wobei die Schwingungen der Kapillare die Intensität des durchgelassenen Lichtstrahls modulieren. Die Intensität des durchgelassenen Lichtstrahles wird mittels eines Lichtempfängers gemessen. Die Schwingungsrichtung der Kapillare in der Ebene ist in der Regel nicht bekannt.

Es ist in der Regel aber so, dass die Schwingungen der Kapillare hauptsächlich in Richtung der Längsachse des Horns verlaufen. Mit dem Messprinzip der Abschattung eines Lichtstrahles kann nur die Komponente der Amplitude der Schwingungen der Kapillare gemessen werden, die senkrecht zur Richtung des Lichtstrahles verläuft.

Es gibt leider eine Vielzahl von unerwünschten Effekten wie z.B. Verschmutzungen der Kapillare, Beugung an der Kapillare, graduelle Oberflächenvariationen der Kapillare, Asymmetrien des Lichtstrahls, usw., die eine reproduzierbare Messung erschweren, wenn nicht besondere Massnahmen getroffen werden. Die Erfindung besteht nun darin, eine Vielzahl von Messungen durchzuführen und die erhaltenen Messwerte zu mitteln. In einem ersten Schritt wird die Kapillare bezüglich des Lichtstrahls justiert. Anschliessend wird die Komponente $A_y$ der Schwingungen der Kapillare, die senkrecht zur Richtung des Lichtstrahls verläuft, gemäss den folgenden Schritten ermittelt:

a) Plazieren der Kapillare auf der einen Seite des Lichtstrahls, ohne dass sie den Lichtstrahl abschattet, und Beaufschlagen des Horns mit Ultraschall;

b) Bewegung der Kapillare in einer vorgegebenen Anzahl von n Schritten entlang einer vorbestimmten Richtung w in den Lichtstrahl hinein oder vollständig durch den Lichtstrahl hindurch, bis sie sich auf der anderen Seite des Lichtstrahls befindet, wobei bei jedem der i = 1 bis n Schritte der Gleichspannungsanteil $U_{DC}(y_i)$ und der Wechselspannungsanteil $U_{AC}(y_i)$ des Ausgangssignals $U_P(y_i)$ des Lichtempfängers sowie eine Koordinate $y_1$ ermittelt werden, wobei die Koordinate $y_i$ die Position der Kapillare in Bezug auf eine senkrecht zum Lichtstrahl verlaufende Koordinatenachse y bezeichnet und wobei die zu messende Komponente $A_y$ in Richtung der Koordinatenachse y verläuft;

c) Berechnung von Empfindlichkeitswerten $S_i(y_i)$ als Ableitung des Gleichspannungsanteils $U_{DC}(y_i)$ nach der Koordinatenachse y zu $S_i(y_i) = \frac{dU_{DC}(y_i)}{dy}$;

d) Auswahl von wenigstens vier Messungen und für jede dieser mindestens vier Messungen Berechnung eines Wertes $A_{y,i}$ zu $A_{y,i} = \frac{U_{AC}(y_i)}{S_i(y_i)}$;

e) Berechnung der Komponente $A_y$ als Mittelwert aus den Werten $A_{y,i}$.

Vorteilhaft erfolgt die Berechnung der Komponente $A_y$ unter Anwendung statistischer Methoden. Insbesondere ist es von Vorteil, die im Schritt c berechneten Empfindlichkeitswerte $S_i(y_i)$ noch zu glätten, beispielsweise durch Mittelung mit benachbarten Messpunkten. Vorteilhaft ist es auch, die Messwerte $U_{DC}(y_i)$ und $U_{AC}(y_i)$ zu glätten. Vorteilhaft ist es weiter, nicht nur vier Messungen, sondern möglichst viele Messungen zu berücksichtigen. Ein mögliches Kriterium für die Auswahl der Messungen ist z.B., dass die Empfindlichkeit $S_i$ einen vorbestimmten Minimalwert überschreitet.

Nachfolgend werden Ausführungsbeispiele der Erfindung anhand der Zeichnung näher erläutert.

Es zeigen:

Fig. 1        eine Messeinrichtung zur Messung der Amplitude der Spitze einer frei schwingenden Kapillare, basierend auf der Abschattung eines Lichtstrahls,

Fig. 2 - 6    verschiedene Positionen der Spitze der Kapillare bezüglich des Lichtstrahls,

Fig. 7 - 11   verschiedene Diagramme, und

Fig. 12, 13   weitere Messeinrichtungen.

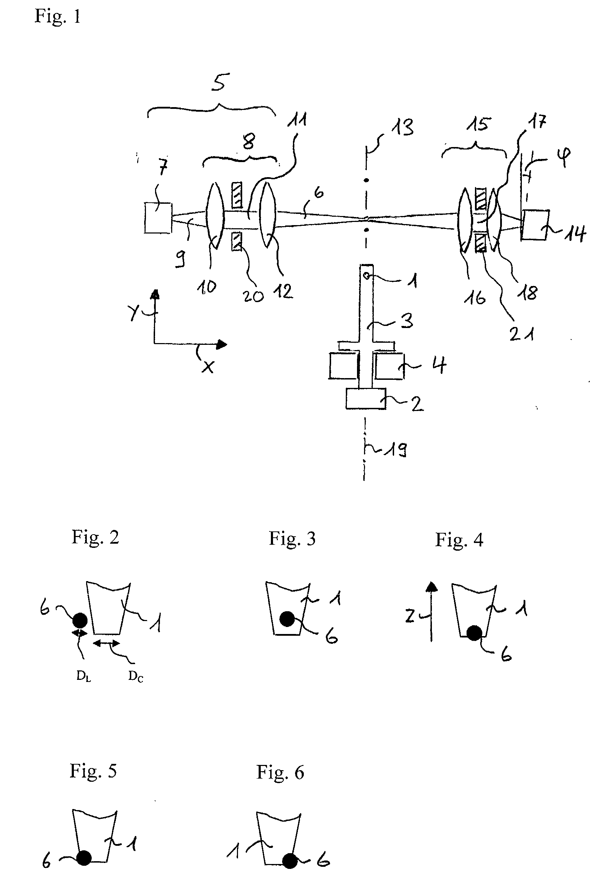

Die Fig. 1 zeigt in Aufsicht eine Kapillare 1, die an der Spitze eines von einem Ultraschallgeber 2 mit Ultraschall beaufschlagbaren Horns 3 eingespannt ist, und eine Messeinrichtung zur Messung der Amplitude der Schwingungen der Spitze der Kapillare 1. Mit x, y und z sind die Koordinaten eines kartesischen Koordinatensystems bezeichnet, wobei die z-Koordinate senkrecht zur Zeichenebene verläuft. Das Horn 3 ist an einem Bondkopf 4 eines Wire Bonders befestigt. Der Bondkopf 4 ermöglicht die Bewegung der Spitze der Kapillare 1 in allen drei Koordinatenrichtungen. Die Messeinrichtung umfasst eine Lichtquelle 5 zur Erzeugung eines Lichtstrahls 6 mit einem in einem Arbeitsbereich der Einrichtung gut definierten Durchmesser. Die Lichtquelle 5 besteht vorzugsweise aus einer Laserdiode 7 und einer ersten optischen Baugruppe 8, die den von der Laserdiode 7 ausgesandten Lichtkegel 9 in den Lichtstrahl 6 transformiert. Im Beispiel besteht die erste optische Baugruppe 8 aus einer ersten Linse 10, die den von der Laserdiode 7 ausgesandten Lichtkegel 9 in einen Strahl parallelen Lichts 11 bündelt, und einer zweiten Linse 12, die den Lichtstrahl 6 wieder fokussiert, so dass der Durchmesser des Lichtstrahls 6 in einer Brennebene 13 der zweiten Linse 12 minimal wird. Diese Brennebene 13 ist zugleich die Messebene für die Messung der Schwingungsamplitude der Kapillare 1. Die Einrichtung umfasst weiter einen Lichtempfänger 14 und eine zweite optische Baugruppe 15, um den Lichtstrahl 6 auf den Lichtempfänger 14 abzubilden. Die zweite optische Baugruppe 15 besteht aus einer ersten Linse 16, die den nach der Messebene wieder divergierenden Lichtstrahl 6 in einen Strahl parallelen Lichts 17 bündelt, und einer zweiten Linse 18, die den Strahl parallelen Lichts 17 auf den Lichtempfänger 14 fokussiert. Der Durchmesser der Spitze der Kapillare 10 beträgt etwa 50 $\mu$m bis 150 $\mu$m. Der wirksame Durchmesser des Lichtstrahls 6 in der Messebene ist kleiner als der Durchmesser der Kapillare 1 an der zu messenden Stelle. Im Beispiel beträgt der Durchmesser des Lichtstrahles 6 etwa 21 $\mu$m.

Wie aus der Fig. 1 ersichtlich ist, verläuft der Lichtstrahl 6 in x-Richtung. Die Längsachse 19 des Horns 3 verläuft in y-Richtung. Für die Messung der Amplitude der Schwingungen der Spitze der Kapillare 1 wird die Spitze der Kapillare 1 in der Brennebene 13 der Linse 12 so im Lichtstrahl 6 positioniert, dass sie einen Teil des Lichtstrahls 6 abschattet. Wenn der Ultraschallgeber 2 eingeschaltet ist, schwingt die Spitze der Kapillare 1 in der xy-Ebene. Die y-Komponente $A_y$ dieser Schwingungen bewirkt eine Änderung der Abschattung des Lichtstrahls 6, welche vom Lichtempfänger 14 detektiert wird, während die x-Komponente $A_x$ dieser Schwingungen die Abschattung nicht ändert.

Die Messeinrichtung zeichnet sich durch zwei besondere Merkmale auf. Zum einen ist der Lichtempfänger 14 gegenüber dem Lichtstrahl 6 um einen vorbestimmten Winkel $\varphi$ geneigt, damit der an der Oberfläche des Lichtempfängers 14 reflektierte Anteil des Lichtstrahls 6 nicht auf die Kapillare 1 zurückreflektiert oder sogar bis auf die Laserdiode 7 zurückreflektiert wird, sondern die Messeinrichtung "ohne zu stören verlässt". Bereits 1-2° Neigung des Winkels $\varphi$ sind ausreichend. Der Lichtstrahl 6 trifft also unter einem von 90° verschiedenen Winkel auf den Lichtempfänger 14 auf. Zum anderen umfassen die beiden optischen Baugruppen 8 und 15 vorzugsweise je eine Blende 20 bzw. 21, um Störlicht aufzufangen.

Die Fig. 2 zeigt die Spitze der Kapillare 1 und den Lichtstrahl 6. Der Durchmesser $D_L$ des Lichtstrahls 6 ist kleiner als der Durchmesser $D_C$ der Spitze der Kapillare 1.

Um die Amplitude der Schwingungen der Spitze der Kapillare 1 zuverlässig messen zu können, muss in einem ersten Teil des Verfahrens die z-Höhe der Kapillare 1 bezüglich des Lichtstrahls 6 justiert werden. Dies erfolgt gemäss den folgenden Schritten:

1. Die Kapillare 1 wird auf der einen Seite des Lichtstrahls plaziert, so dass sie den Lichtstrahl nicht abschattet. Zudem wird sie in z-Richtung soweit abgesenkt, dass sie im nächsten Schritt den Lichtstrahl vollständig abdecken wird.

2. Die Kapillare 1 wird schrittweise in y-Richtung durch den Lichtstrahl hindurch bewegt, bis sie sich auf der anderen Seite des Lichtstrahls befindet. Aus dem vom Lichtempfänger gelieferten Signal wird anschliessend eine Lage $y_0$ ermittelt, bei der der Lichtstrahl etwa in der Mitte auf die Kapillare auftrifft. Diese Lage $y_0$ ist in der Fig. 3 dargestellt.

3. Die Kapillare 1 wird in die Lage $y_0$ gebracht und dann in z-Richtung soweit angehoben, bis das Ausgangssignal des Lichtempfängers einen vorbestimmten Wert erreicht, der typischerweise etwa 5% des Signals erreicht, wenn die Kapillare den Lichtstrahl nicht abschattet. Diese im folgenden als $z_0$ bezeichnete Lage ist in der Fig. 4 dargestellt.

In einem zweiten Teil des Verfahrens wird nun die y-Komponente $A_y$ der Amplitude A der Schwingungen der Spitze der Kapillare 1 gemäss den folgenden Schritten ermittelt:

a) Die Kapillare 1 wird in die Lage $Z_0$ gebracht und in y-Richtung auf der einen Seite des Lichtstrahls 6 plaziert, so dass sie den Lichtstrahl 6 nicht abschattet. Das Horn 3 wird vom Ultraschallgeber 2 mit Ultraschall beaufschlagt.

b) Die Kapillare 1 wird nun in einer Anzahl von n Schritten in y-Richtung durch den Lichtstrahl 6 hindurch bewegt, bis sie sich auf der anderen Seite des Lichtstrahls 6 befindet. Das Ausgangssignal $U_P$ des Lichtempfängers 14 enthält einen Gleichspannungsanteil $U_{DC}$ und einen Wechselspannungsanteil $U_{AC}$:

$$U_P = U_{DC} + U_{AC}. \qquad (1)$$

Der Gleichspannungsanteil $U_{DC}$ stammt von dem Teil des Lichtstrahls 6, der von der Kapillare 1 nicht abgedeckt wird. Der Wechselspannungsanteil $U_{AC}$ stammt von dem Teil des Lichtstrahls 6, der von der Spitze der Kapillare 1 aufgrund ihrer Schwingungen moduliert wird. Bei jedem der i = 1 bis n Schritte werden die Anteile $U_{DC}(y_i)$ und $U_{AC}(y_i)$ des Ausgangssignals $U_P(y_i)$ des Lichtempfängers 14 sowie die zugehörige y-Koordinate $y_i$ ermittelt und gespeichert.

Der Abstand zwischen zwei benachbarten Koordinaten $y_i$ und $y_{i+1}$ beträgt typischerweise 1 µm.

Der Wechselspannungsanteil $U_{AC}$ ist mit der y-Komponente $A_y$ der Schwingungen der Spitze der Kapillare 1 wie folgt verknüpft:

$$U_{AC} = S(y) * A_y = \frac{dU_{DC}(y)}{dy} * A_y, \qquad (2)$$

wobei die Empfindlichkeit $S(y)$ gegeben ist durch die Ableitung des Gleichspannungsanteils $U_{DC}$ nach der Koordinate y.

c) Aus den Messwerten $U_{DC}(y_i)$ wird nun für jeden Messschritt i die Ableitung $\frac{dU_{DC}(y_i)}{dy}$ berechnet und als Empfindlichkeit $S_i(y_i)$ gespeichert:

$$S_i(y_i) = \frac{dU_{DC}(y_i)}{dy} \qquad (3).$$

Gemäss Gleichung (3) kann nun für jeden Messpunkt i eine Amplitude $A_{y,i}$ berechnet werden zu

$$A_{y,i} = \frac{U_{AC}(y_i)}{S_i(y_i)} \qquad (4).$$

d) Durch eine Mittelwertbildung wird aus den Werten $A_{y,i}$ gemäss Gleichung (4) ein Mittelwert für die y-Komponente $A_y$ der Amplitude A der Schwingungen der Spitze der Kapillare 1 berechnet.

Für die Berechnung des Mittelwertes der y-Komponente $A_y$ gemäss den obigen Verfahrensschritten 3 und 4 werden vorzugsweise nicht alle, sondern nur diejenigen Messpunkte berücksichtigt, bei denen die Empfindlichkeit S einen Minimalwert überschreitet. Dies ist der Fall, wenn die Kapillare 1 in den Lichtstrahl 6 hineinfährt und wenn sie wieder hinausfährt, wenn also die Kapillare 1 den Lichtstrahl 6, wie in den Figuren 5 und 6 dargestellt ist, nur teilweise abdeckt. Es werden also nur diejenigen Messpunkte ausgewählt, die aus physikalischer Sicht tatsächlich einen brauchbaren Messwert liefern. Im Bereich, wo die Kapillare 1 den Lichtstrahl 6 annähernd vollständig abschattet, tragen ihre Schwingungen zum Messsignal nämlich nichts bei. Zudem ist es von Vorteil, in der Statistik übliche Methoden anzuwenden. Insbesondere ist es vorteilhaft, die berechneten Empfindlichkeiten $S_i(y_i)$ zu glätten. Die Glättung kann erfolgen, indem jeweils der Mittelwert über z.B. drei benachbarte Messwerte gebildet wird oder durch Anfitten einer vorbestimmten Funktion. Es ist auch von Vorteil, die gemessenen Werte $U_{DC}(y_i)$ und $U_{AC}(y_i)$ zu glätten und in den Gleichungen (3) und/oder (4) jeweils die geglätteten Werte einzusetzen. Auch ist es vorteilhaft, allfällige Ausreisser wegzulassen.

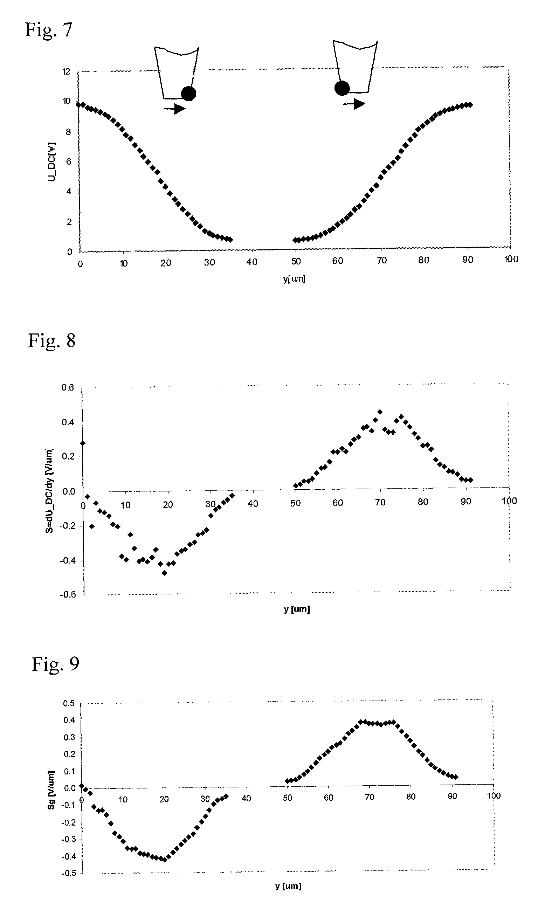

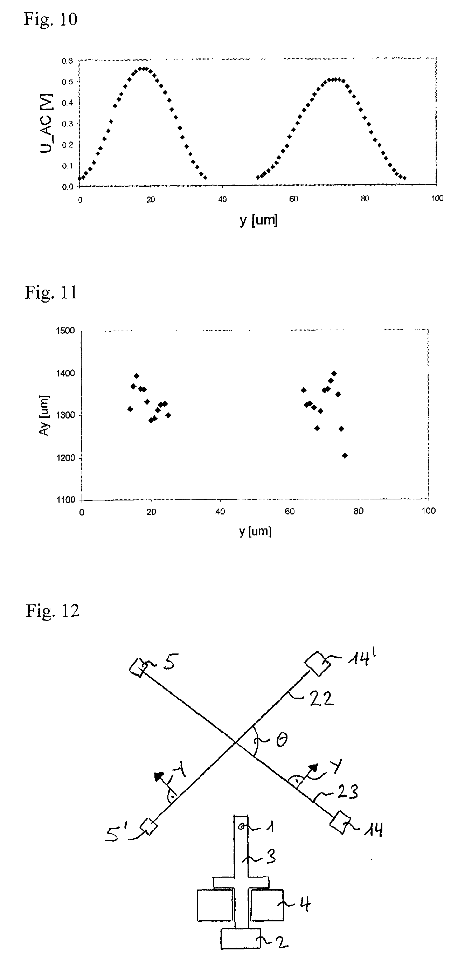

Die Fig. 7 bis 11 zeigen den Gleichspannungsanteil $U_{DC}(y_i)$, die daraus berechnete Empfindlichkeit $S_i(y_i)$ und geglättete Werte $S_g(y_i)$ für die Empfindlichkeit $S_i(y_i)$, den Wechselspannungsanteil $U_{AC}(y_i)$ und die aus dem Wechselspannungsanteil $U_{AC}(y_i)$ und der geglätteten Empfindlichkeit $S_g(y_i)$ berechneten Amplituden $A_{y,i}$ in Funktion der y-Koordinate $y_i$. In der Fig. 7 ist schematisch auch die Position der Kapillare 1 relativ zum Lichtstrahl 6 dargestellt, wobei ein Pfeil die Bewegungsrichtung der Kapillare 1 anzeigt. In der Fig. 11 sind nur diejenigen Amplituden $A_{y,i}$ berechnet und dargestellt worden, wo die zugehörige Empfindlichkeit $S_i(y_i)$ einen vorbestimmten Mindestwert überschreitet. Diese Amplituden $A_{y,i}$ wurden im Schritt 4 gemittelt, um einen einzigen Wert für die Komponente $A_y$ der Amplitude A der Schwingungen der Spitze der Kapillare 1 zu erhalten. Im Beispiel ergibt sich für die Komponente $A_y$ der Wert $A_{y,in}$ = 1.331 µm ± 0.033 µm aus den Messpunkten, wenn die Kapillare 1 in den Lichtstrahl 6 hineinfährt, und der Wert $A_{y,out}$ = 1.334µm ± 0.040µm aus den Messpunkten, wenn die Kapillare 1 aus dem Lichtstrahl 6 herausfährt. Die Werte $A_{y,in}$ und $A_{y,out}$ sind also annähernd gleich und insgesamt erhält man für die Komponente $A_y$ den Wert $A_y$ = 1.332µm ± 0.037µm.

Es ist zwar sinnvoll, mit der Kapillare 1 vollständig durch den Lichtstrahl 6 hindurch zu fahren und so viele Messpunkte wie möglich aufzunehmen, da sich mit jedem Messpunkt die Genauigkeit erhöht. Es ist aber auch möglich, mit der Kapillare 1 nur teilweise in den Lichtstrahl 6 hineinzufahren.

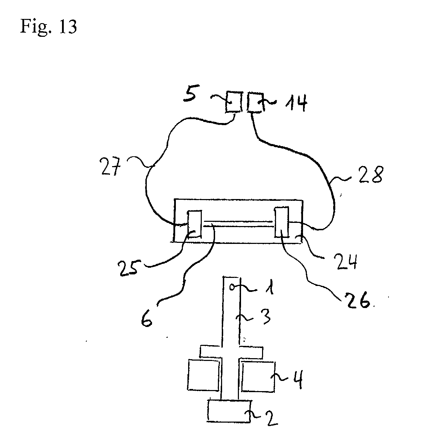

Die Fig. 12 zeigt eine Messeinrichtung mit zwei, unter einem vorbestimmten Winkel θ zueinander verlaufenden Lichtstrahlen 22 und 23, die von Lichtquellen 5 und 5' erzeugt und deren Intensität mit Lichtempfängern 14 bzw. 14' gemessen wird. Mit dieser Messeinrichtung können zwei Komponenten $A_1$ und $A_2$ der Amplitude A der Schwingungen der Kapillare 1 gemessen werden. Die Komponente $A_1$ bezeichnet die Komponente der Amplitude A, die in der xy-Ebene und senkrecht zur Richtung des ersten Lichtstrahles 22 verläuft, die Komponente $A_2$ bezeichnet die Komponente der Amplitude A, die in der xy-Ebene und senkrecht zur Richtung des zweiten Lichtstrahles 23 verläuft. Jede der Komponenten $A_1$ und $A_2$ kann gemäss dem oben beschriebenen Verfahren bestimmt werden und die Amplitude A kann dann unter Einbezug der konkreten Geometrie mit herkömmlicher Mathematik berechnet werden. Bei dem anhand der Fig. 1 erläuterten Beispiel verläuft die Bewegungsachse der Kapillare 1 senkrecht zur Richtung des Lichtstrahles 6. Im Beispiel gemäss Fig. 12 kann die Bewegung der Kapillare 1 für die Messung der Komponenten $A_1$ und $A_2$ jeweils senkrecht zur Richtung des jeweiligen Lichtstrahles 22 bzw. 23 gewählt werden. Die Bewegung der Kapillare 1 kann aber auch entlang einer vorbestimmten Richtung w erfolgen. In diesem Fall bezeichnet die Koordinate $y_i$ die Komponente der Bewegung senkrecht zur Richtung des jeweiligen Lichtstrahls 22 bzw. 23. Die Koordinate $y_i$ bezeichnet also in jedem Fall die Position der Kapillare 1 in Bezug auf eine senkrecht zur Richtung des entsprechenden Lichtstrahls 22 bzw. 23 verlaufende Richtung. Die Richtungen y sind für beide Lichtstrahlen 22 bzw. 23 dargestellt.

Die Messeinrichtungen gemäss Fig. 1 und 12 können auf dem Wire Bonder fest installiert sein, so dass die Schwingungsamplitude der Kapillare jederzeit gemessen werden kann.

Die Fig. 13 zeigt eine Messeinrichtung, die sich als portables Gerät für den Einsatz auf verschiedenen Wire Bondern eignet. Die Messeinrichtung besteht aus einer Plattform 24, auf der zwei sogenannte Snap-on Focuser 25 und 26 fest angeordnet sind. Eine erste Fiber 27 verbindet die Lichtquelle 5 mit dem ersten Snap-on Focuser 25, eine zweite Fiber 28 verbindet den zweiten Snap-on Focuser 26 mit dem Lichtempfänger 14. Der erste Snap-on Focuser 25 hat die Aufgabe, das durch die erste Fiber 27 geleitete Licht in einen Lichtstrahl 6 umzuwandeln, der in einer Messebene fokussiert ist. Der zweite Snap-on Focuser 26 hat die Aufgabe, das von der Kapillare 1 durchgelassene Licht des Lichtstrahls 6 in die zweite Fiber 28 einzukoppeln.

Der Ultraschallgeber 2 (Fig. 1, Fig. 12 und Fig. 13) des Wire Bonders wird von einem Parameter P gesteuert. Der Parameter P ist beispielsweise der Strom, der durch den Ultraschallgeber fliesst, oder die Spannung, die an den Ultraschallgeber angelegt wird. In der Regel ist die Beziehung zwischen dem Parameter P und der Amplitude A linear:

$$A = \gamma * P \qquad (5)$$

Die Messung der Komponente $A_y$ der Amplitude A der Schwingungen der Spitze der Kapillare 1, bzw. die Messung der Amplitude A erlaubt es somit, die Konstante γ zu bestimmen. Im Produktionsbetrieb des Wire Bonders kann dann die Konstante γ nach jedem Kapillarenwechsel durch eine Messung neu bestimmt und für die Produktion berücksichtigt werden.

**Patentansprüche**

1. Verfahren für die Messung einer Komponente $A_y$ der Amplitude der Schwingungen der Spitze einer Kapillare (1), die an einem von einem Ultraschallgeber (2) beaufschlagbaren Horn (3) eingespannt ist, wobei die Messung auf der Abschattung eines Lichtstrahls (6) durch die Kapillare (1) basiert und wobei die Intensität des Lichtstrahls (6) mittels eines Lichtempfängers (14) gemessen wird, **gekennzeichnet durch** folgende Schritte:

   a) Plazieren der Kapillare (1) auf der einen Seite des Lichtstrahls (6), ohne dass sie den Lichtstrahl (6) abschattet, und Beaufschlagen des Horns (3) mit Ultraschall;

   b) Bewegung der Kapillare (1) in einer vorgegebenen Anzahl von n Schritten entlang einer vorbestimmten Richtung in den Lichtstrahl (6) hinein oder vollständig **durch** den Lichtstrahl (6) hindurch, wobei bei jedem der i = 1 bis n Schritte der Gleichspannungsanteil $U_{DC}(y_i)$ und der Wechselspannungsanteil $U_{AC}(y_i)$ des Ausgangssignals des Lichtempfängers (14) sowie eine Koordinate $y_i$ ermittelt werden, wobei die Koordinate $y_i$ die Position der Kapillare (1) in Bezug auf eine senkrecht zum Lichtstrahl (6) verlaufende Koordinatenachse y bezeichnet und wobei die zu messende Komponente $A_y$ in Richtung der Koordinatenachse y verläuft;

   c) Berechnung von Empfindlichkeitswerten $S_i(y_i)$ als Ableitung des Gleichspannungsanteils $U_{DC}(y_i)$ nach der Koordinatenachse y zu $S_i(y_i) = \dfrac{dU_{DC}(y_i)}{dy}$;

   d) Auswahl von wenigstens vier Messungen und für jede dieser mindestens vier Messungen Berechnung eines Wertes $A_{y,i}$ zu $A_{y,i} = \dfrac{U_{AC}(y_i)}{S_i(y_i)}$;

e) Berechnung der Komponente $A_y$ als Mittelwert aus den Werten $A_{y,i}$.

2. Verfahren nach Anspruch 1, **dadurch gekennzeichnet, dass** die Empfindlichkeitswerte $S_i(y_i)$ nach dem Schritt c geglättet werden.

3. Verfahren nach Anspruch 1 oder 2, **dadurch gekennzeichnet, dass** zwei verschiedene Komponenten der Amplitude A der Schwingungen der Kapillare (1) bestimmt werden.

4. Einrichtung für die Messung einer Komponente $A_y$ der Amplitude der Schwingungen der Spitze einer Kapillare (1), die an einem von einem Ultraschallgeber (2) beaufschlagbaren Horn (3) eingespannt ist, wobei die Messung auf der Abschattung eines Lichtstrahls (6) durch die Kapillare (1) basiert und wobei die Intensität des Lichtstrahls (6) mittels eines Lichtempfängers (14) gemessen wird, **dadurch gekennzeichnet, dass** der Lichtstrahl (6) unter einem von 90° verschiedenen Winkel auf den Lichtempfänger (14) auftrifft.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

EP 1 340 582 A1

| Europäisches Patentamt | **EUROPÄISCHER RECHERCHENBERICHT** | Nummer der Anmeldung EP 02 00 4700 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | PATENT ABSTRACTS OF JAPAN vol. 1998, no. 13, 30. November 1998 (1998-11-30) & JP 10 209199 A (TOSHIBA CORP), 7. August 1998 (1998-08-07) * Zusammenfassung * | 1-3 | B23K20/00 B23K20/10 H01L21/607 G01H9/00 |
| A | PATENT ABSTRACTS OF JAPAN vol. 012, no. 178 (P-708), 26. Mai 1988 (1988-05-26) & JP 62 289733 A (ROZEFU KK), 16. Dezember 1987 (1987-12-16) * Zusammenfassung * | 1-3 | |
| A,D | US 5 199 630 A (A. FELBER ET AL) 6. April 1993 (1993-04-06) * Spalte 2, Zeile 34-56 * * Spalte 3, Zeile 65 - Spalte 4, Zeile 54 * | 1-3 | |
| A | PATENT ABSTRACTS OF JAPAN vol. 016, no. 571 (P-1459), 11. Dezember 1992 (1992-12-11) & JP 04 221722 A (FURUNO ELECTRIC CO LTD), 12. August 1992 (1992-08-12) * Zusammenfassung * | 1 | RECHERCHIERTE SACHGEBIETE (Int.Cl.7) B23K H01L G01H G01B |

Der vorliegende Recherchenbericht wurde für alle Patentansprüche erstellt

| Recherchenort MÜNCHEN | Abschlußdatum der Recherche 3. Juli 2002 | Prüfer Jeggy, T |
|---|---|---|

**Europäisches**

**Patentamt**

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-3

| Europäisches Patentamt | MANGELNDE EINHEITLICHKEIT DER ERFINDUNG ERGÄNZUNGSBLATT B | Nummer der Anmeldung EP 02 00 4700 |

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3

    Verfahren für die Messung einer Komponente Ay der Amplitude der Schwingen der Spitze einer Kapillare

2. Anspruch : 4

    Einrichtung für die Messung einer Komponente, wobei der Lichstrahl des Lasers unter einem Winkel von 90 Grad verschiedenen Winkel auf den Lichtempfanger auftritt

**ANHANG ZUM EUROPÄISCHEN RECHERCHENBERICHT
ÜBER DIE EUROPÄISCHE PATENTANMELDUNG NR.**

EP 02 00 4700

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2002

| Im Recherchenbericht angeführtes Patentdokument | | Datum der Veröffentlichung | Mitglied(er) der Patentfamilie | | Datum der Veröffentlichung |
|---|---|---|---|---|---|
| JP 10209199 | A | 07-08-1998 | KEINE | | |
| JP 62289733 | A | 16-12-1987 | JP | 1933903 C | 26-05-1995 |
| | | | JP | 6063823 B | 22-08-1994 |
| US 5199630 | A | 06-04-1993 | AT | 117611 T | 15-02-1995 |
| | | | DE | 59104416 D1 | 09-03-1995 |
| | | | EP | 0498936 A1 | 19-08-1992 |
| | | | HK | 103495 A | 07-07-1995 |
| | | | JP | 3178874 B2 | 25-06-2001 |
| | | | JP | 4319627 A | 10-11-1992 |
| JP 04221722 | A | 12-08-1992 | KEINE | | |

EPO FORM P0461

Für nähere Einzelheiten zu diesem Anhang : siehe Amtsblatt des Europäischen Patentamts, Nr.12/82